# EUROPÄISCHE PATENTSCHRIFT

(11) **EP 0 940 323 B1**
(45) Veröffentlichungstag und Bekanntmachung des Hinweises auf die Patenterteilung: **07.05.2003**
(21) Anmeldenummer: 99101609.8
(22) Anmeldetag: 03.02.1999
(51) Int. Cl.: B62D 25/08, B62D 21/11, B62D 21/12, B60G 9/00

(54) **Fahrgestell eines schweren Nutzfahrzeuges**
Chassis for a heavy-duty utility vehicle
Chassis pour véhicule utilitaire lourd

(30) Priorität: 04.03.1998 DE 19809268
(43) Veröffentlichungstag der Anmeldung: 08.09.1999
(73) Patentinhaber: MAN Nutzfahrzeuge Aktiengesellschaft, 80976 München (DE)
(72) Erfinder: Rühmann, Gerd, Dipl.-Ing. (FH), 82229 Seefeld (DE); Sigl, Johann, Dipl.-Ing. (FH), 82266 Becher (DE); Breitling, Ulrich, Dr.-Ing., 81245 München (DE); Nickels, Thomas, 81541 München (DE); Hintereder, Jürgen, Dipl.-Ing. (FH), 85586 Poing (DE); Neukam, Michael, Dipl.-Ing. (TU), 82110 Germering (DE); Lutsch, Helmar, Dipl.-Ing., 81927 München (DE)

(56) Entgegenhaltungen:
- EP-A- 0 636 531
- EP-A- 0 678 405
- DE-A- 4 226 500
- DE-A- 19 624 242
- US-A- 4 168 086
- US-A- 5 641 181

## Beschreibung

Die Erfindung betrifft ein Fahrgestell eines schweren Nutzfahrzeugs mit Merkmalen gemäß dem Oberbegriff des Anspruchs 1.

Die Erfindung geht aus von der DE 196 24 242 A1. Aus dieser ist ein Nutzfahrzeug mit einer Starrachse bekannt, über deren Starrachskörper sich ein von vorne gesehen U-förmiger Querträger erstreckt, der die beiden Rahmen-Längsträger miteinander verbindet und außerdem mit seiner mittleren Quertraverse dachbildend auch einen darunter verlaufenden Panhardstab überbrückt. Mit seinen äußeren Enden ist der Querträger direkt an den beiden Rahmen-Längsträgern angeschlossen. Der Starrachskörper ist des weiteren in herkömmlicher Weise über je Achsseite einen Luftfederbalg und einen benachbart neben diesem angeordneten Stoßdämpfer gegenüber dem Fahrzeugrahmen abgefedert.

Des weiteren ist aus der EP 0636531 A2 die Hinterachsaufhängung eines Personenkraftwagen bekannt. Dabei ist eine Starrachse über je Achsseite ein Dämpferbein gegenüber einem Bodenblechteil abgestützt. Außerdem ist zur Querführung der Starrachse ein Panhardstab vorgesehen.

Ferner offenbart die DE 21 42 079 A1 eine luft- oder schraubengefederte Verbundlenker-Vorderachse mit einem Starrachskörper und zwei fest mit diesem verbundenen Längslenkern. Zur Querführung ist ein Panhardstab vorgesehen, der einenendes an einem Längslenker und andernendes an der gefederten Masse des Fahrzeugs angelenkt ist.

Demgegenüber ist es Aufgabe der Erfindung, bei einem Fahrgestell eines schweren Nutzfahrzeugs der gattungsgemäßen Art die Aufhängung und Führung der Starrachse sowie deren Federung und Dämpfung auf möglichst platzsparende Weise und so darzustellen, dass sich im Bereich der Starrachse ein hinreichend großer Freiraum über deren Mittelabschnitt sowie stabile Rahmenverhältnisse erzielen lassen.

Diese Aufgabe ist bei einem Fahrgestell der gattungsgemäßen Art erfindungsgemäß durch die im Anspruch 1 angegebenen Merkmale gelöst.

Vorteilhafte Ausgestaltungen und Weiterbildungen sowie Anwendungen der Erfindung sind in den Unteransprüchen angegeben.

Aufgrund des Vorsehens des erfindungsgemäß dreiteiligen U-förmigen Querträgers ergibt sich im Bereich der Starrachse ein entsprechend stabilisierter Rahmenabschnitt sowie ein großer Freiraum zwischen den Rahmen-Längsträgern und über der Querträger-Quertraverse, was dort den ungehinderten Einbau anderer Fahrzeugteile, wie eines Antriebsaggregates in einem Lastkraftwagen oder das Vorsehen eines breiten Mittelganges in einem Omnibus ermöglicht. Außerdem stellt das erfindungsgemäße Vorsehen von Feder-Dämpfer-Beinen in einem schweren Nutzfahrzeug ein Novum dar, weil solche Federbeine bisher nur in Personenkraftwagen zur Anwendung kamen. Das erfindungsgemäße Anschließen der Feder-Dämpfer-Beine jeweils oben an einem am Fahrzeugrahmen befestigten Federbeinhalter und unten an einer Anlenkstelle am Starrachskörper, insbesondere so weit wie möglich außen im Sinne einer größtmöglichen Federspur mit von vorne gesehen gepfeilter Anordnung der Federbeine, ergibt einen hohen Fahr- und Federungskomfort. Besonders vorteilhaft kommt dies zum Tragen, wenn die Starrachse nach Art einer selbststabilisierenden Verbundlenkerachse ausgebildet ist, mit Merkmalen, wie im Anspruch 11 angegeben. Eine besonders vorteilhafte Verbindung zwischen den Federbeinhaltern und der Quertraverse ergibt sich aufgrund der erfindungsgemäßen Bauart dieser Bauteile bei Realisierung des Querträgers, weil alle drei Teile einzeln maßhaltig vorfertigbar und dann sauber und sicher miteinander verbindbar sind.

Nachstehend ist die Erfindung anhand der Zeichnung und darin aufgezeigter Beispiele in Verbindung mit einer ebenso neuartigen, nach Art einer selbststabilisierenden Verbundlenkerachse konstruierten Starrachse näher erläutert. In der Zeichnung zeigen:

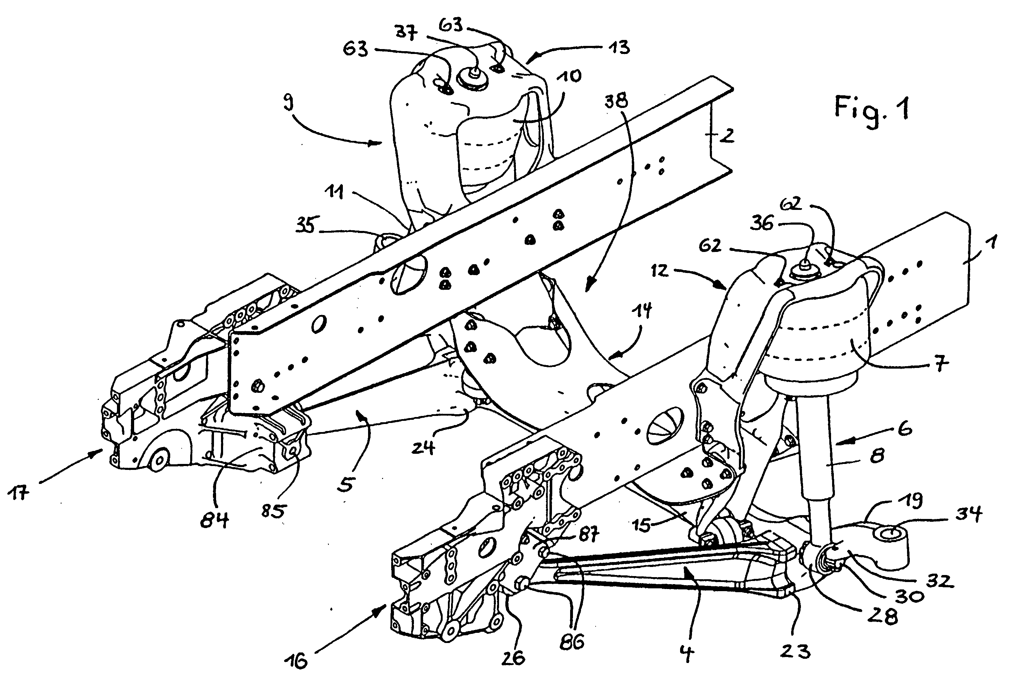

- Fig. 1: perspektivisch den vorderen Endbereich des Fahrgestells eines Frontlenker-Lastkraftwagen (als Beispiel eines schweren Nutzfahrzeuges) mit der erfindungsgemäßen Starrachse samt Aufhängung, Federung und Dämpfung,

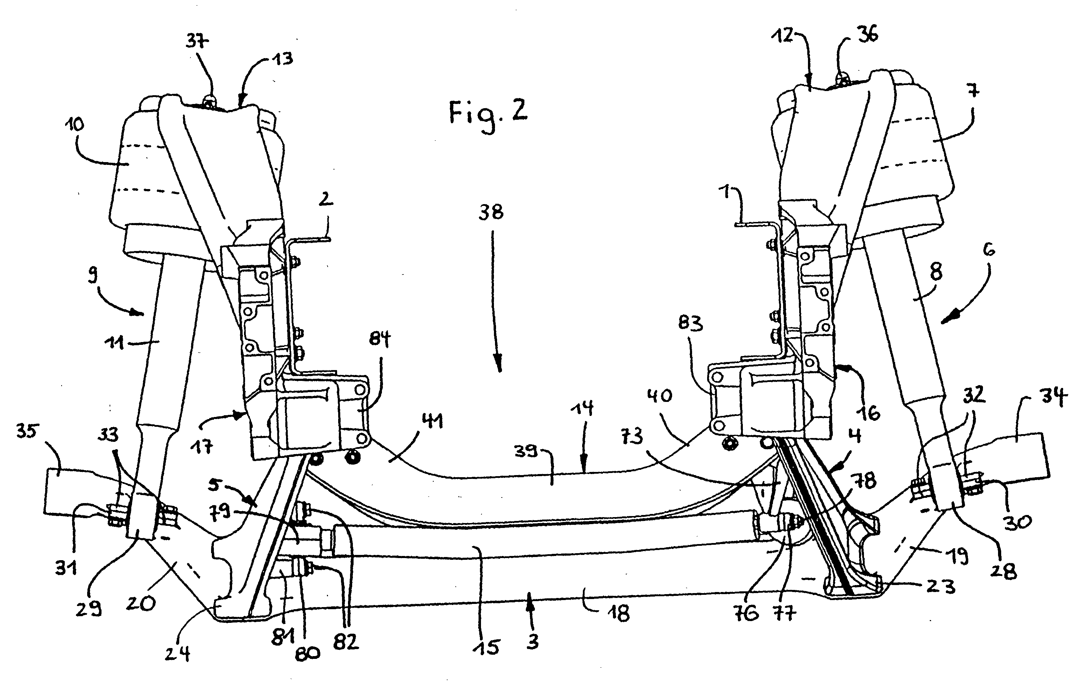

- Fig. 2: den Fahrgestellbereich gemäß Fig. 1 in Ansicht von vorn,

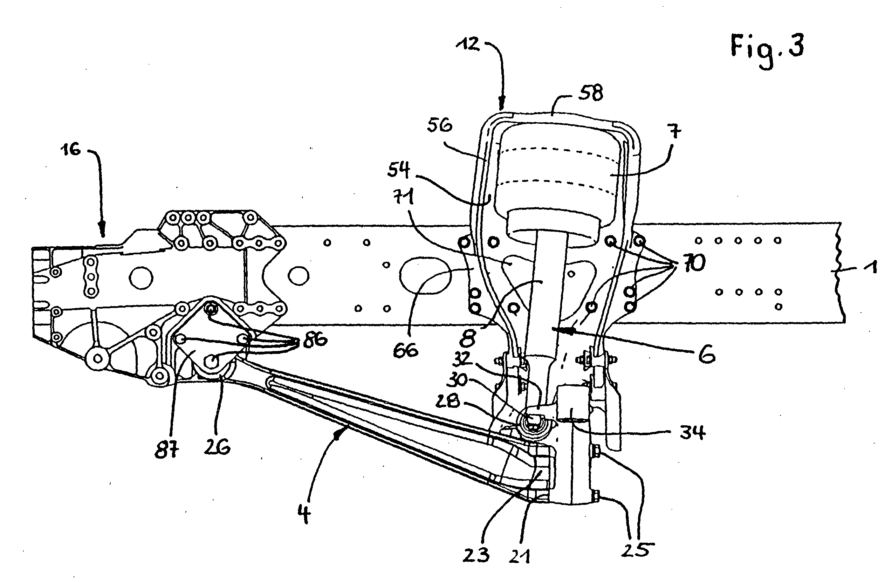

- Fig. 3: den Fahrgestellbereich gemäß Fig. 1 in Seitenansicht,

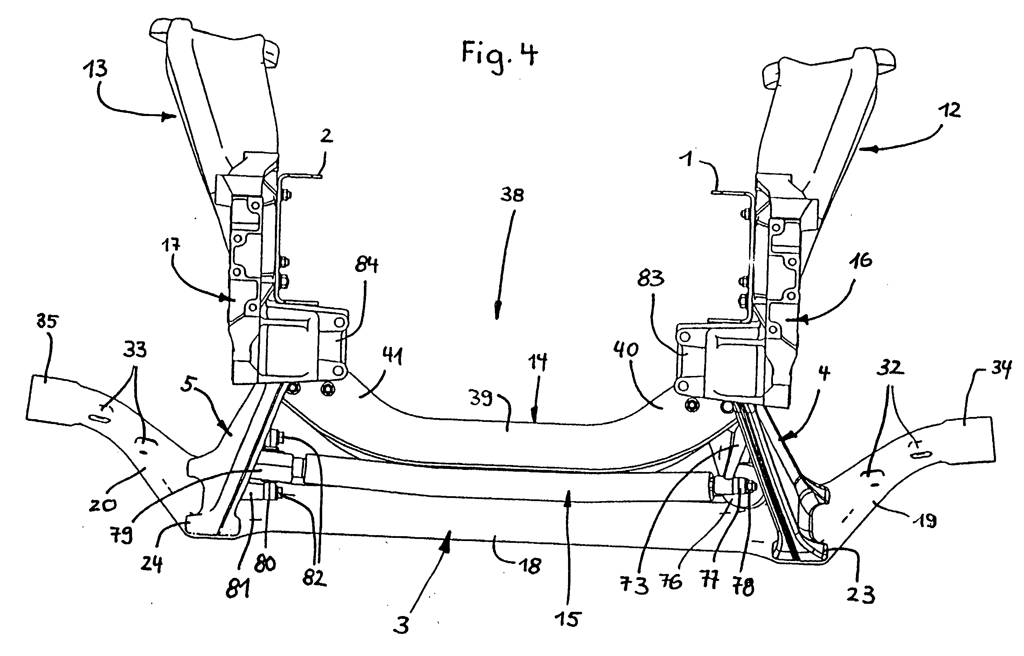

- Fig. 4: die Darstellung gemäß Fig. 2 ohne Federbeine,

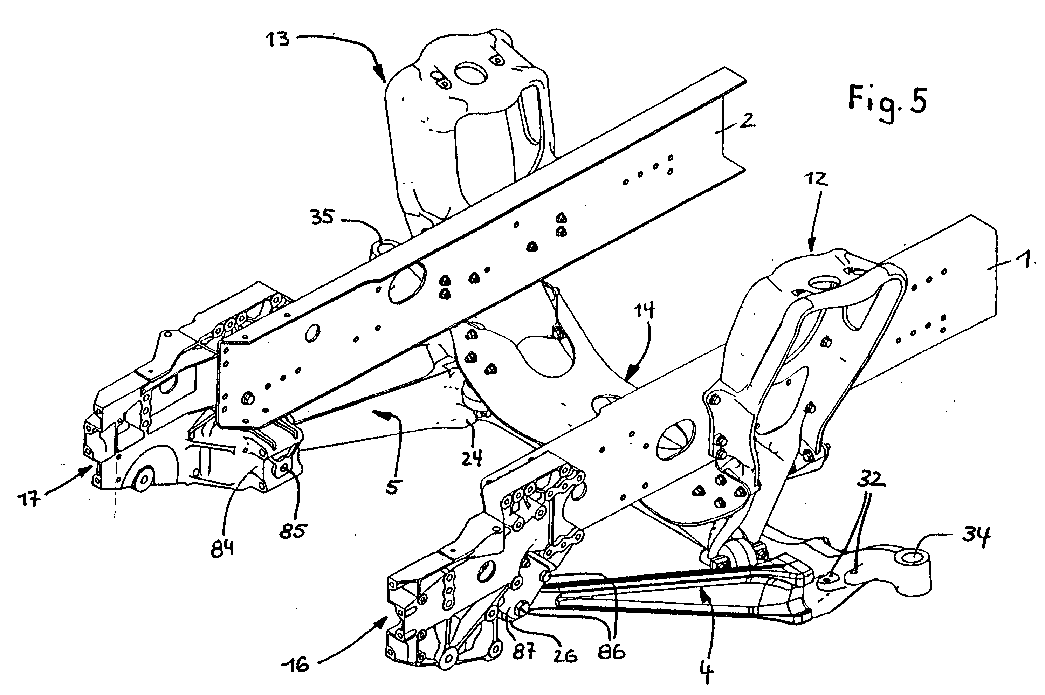

- Fig. 5: die Darstellung gemäß Fig. 1 ohne Federbeine,

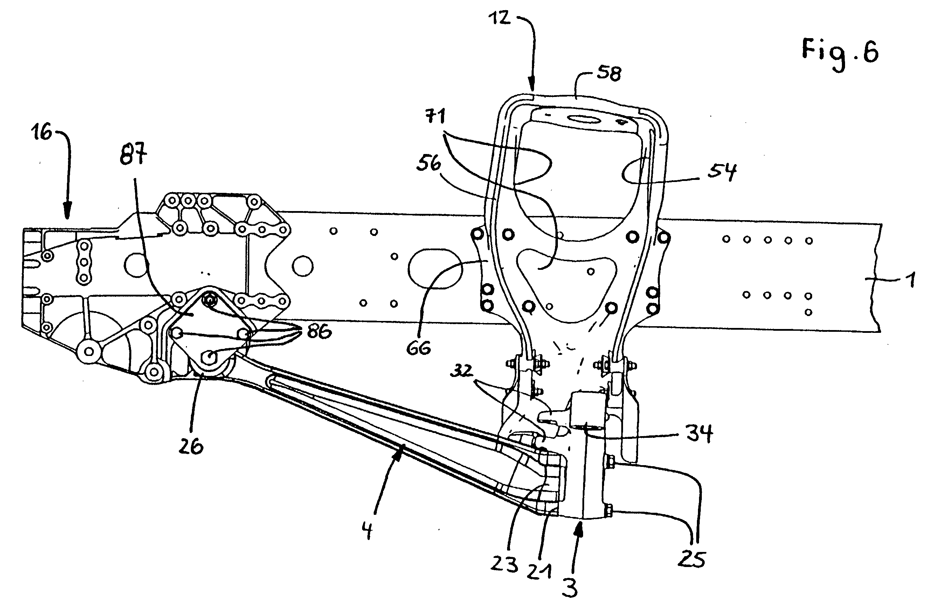

- Fig. 6: die Darstellung gemäß Fig. 3 ohne Federbeine,

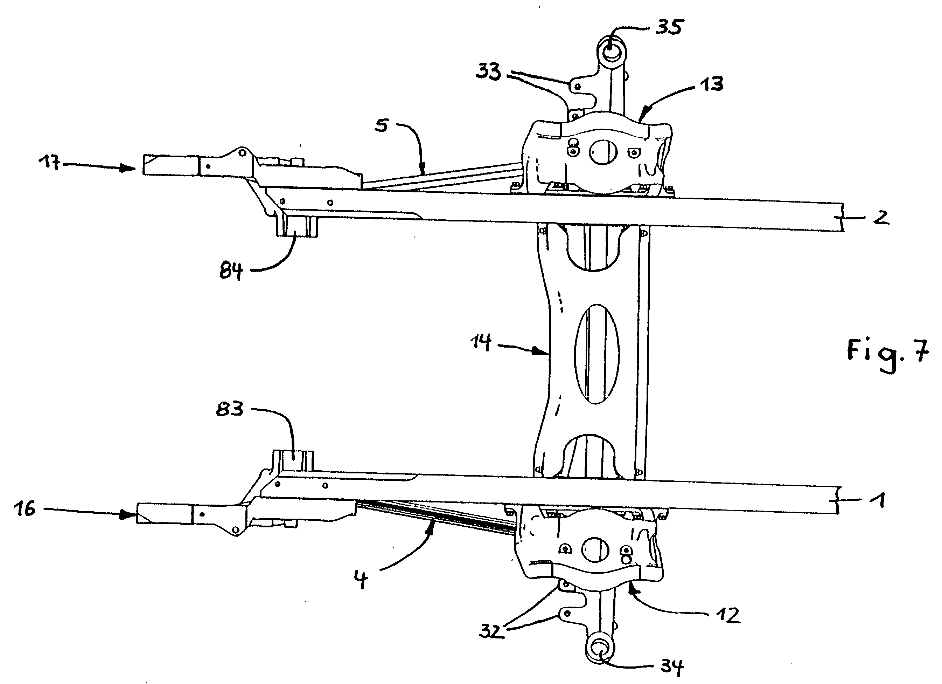

- Fig. 7: die Darstellung gemäß Fig. 4 in Draufsicht ohne Panhardstab,

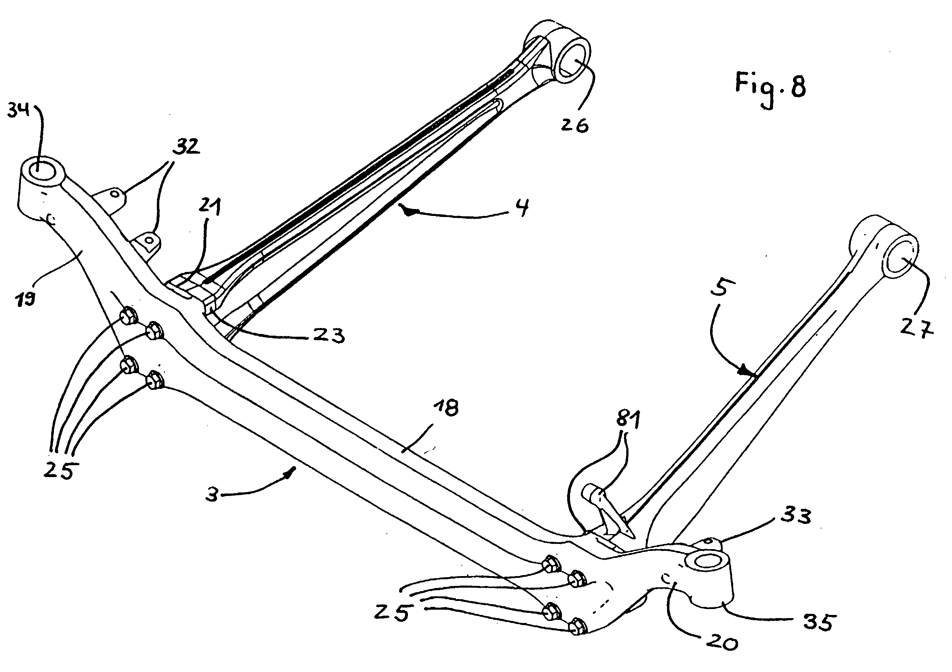

- Fig. 8: den Starrachskörper-Längslenker-Verbund aus den Fig. 1 bis 7 in perspektivischer Alleindarstellung,

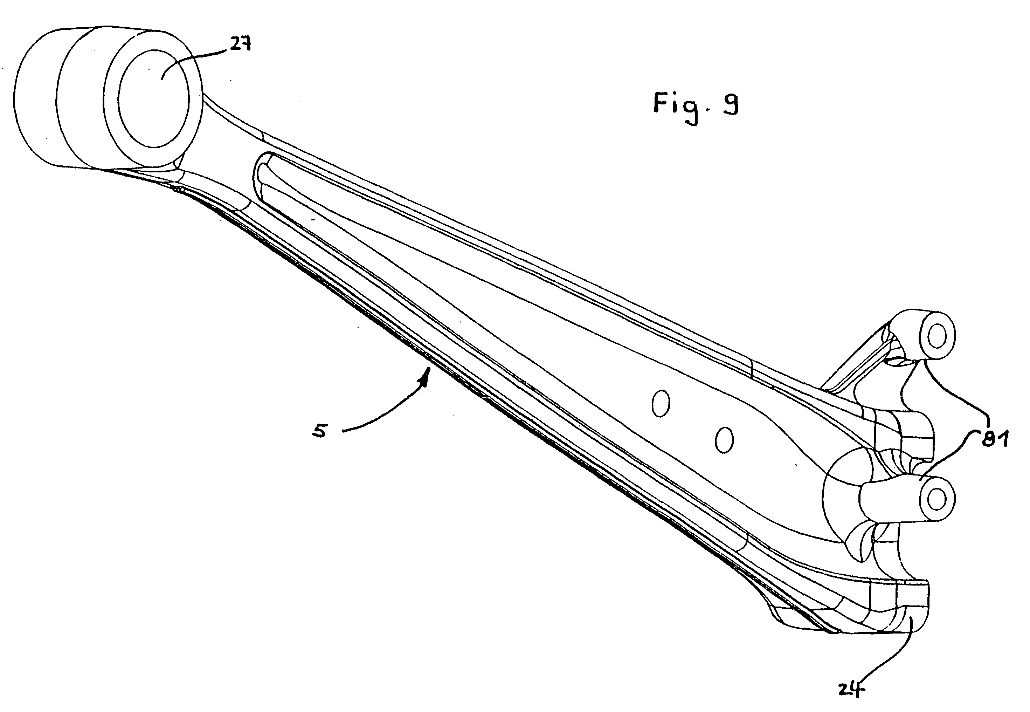

- Fig. 9: einen Längslenker aus dem Starrachskörper-Längslenker-Verbund gemäß Fig. 8 in perspektivischer Alleindarstellung,

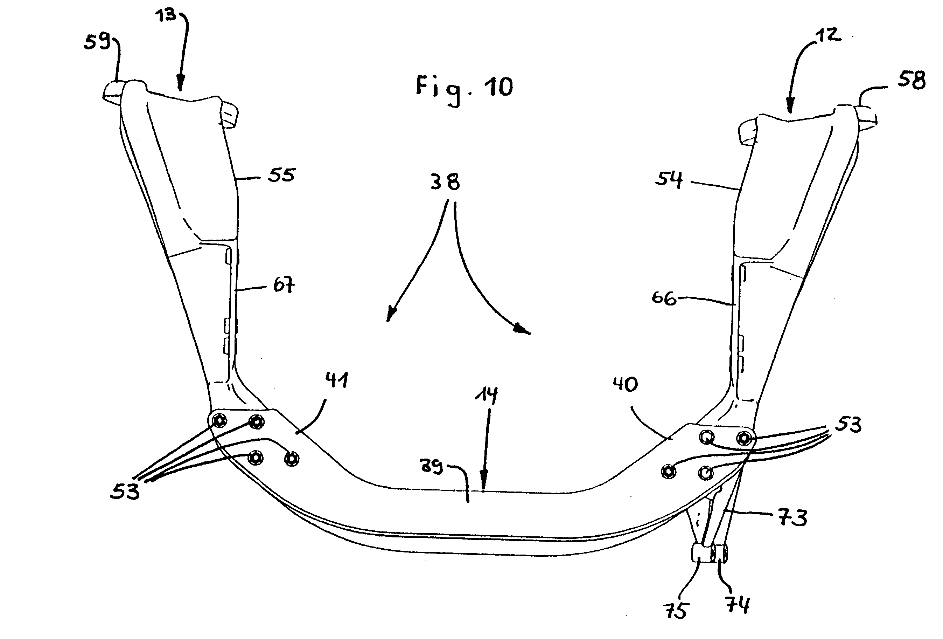

- Fig. 10: den erfindungsgemäßen U-förmigen Querträger in vorderansichtiger Alleindarstellung,

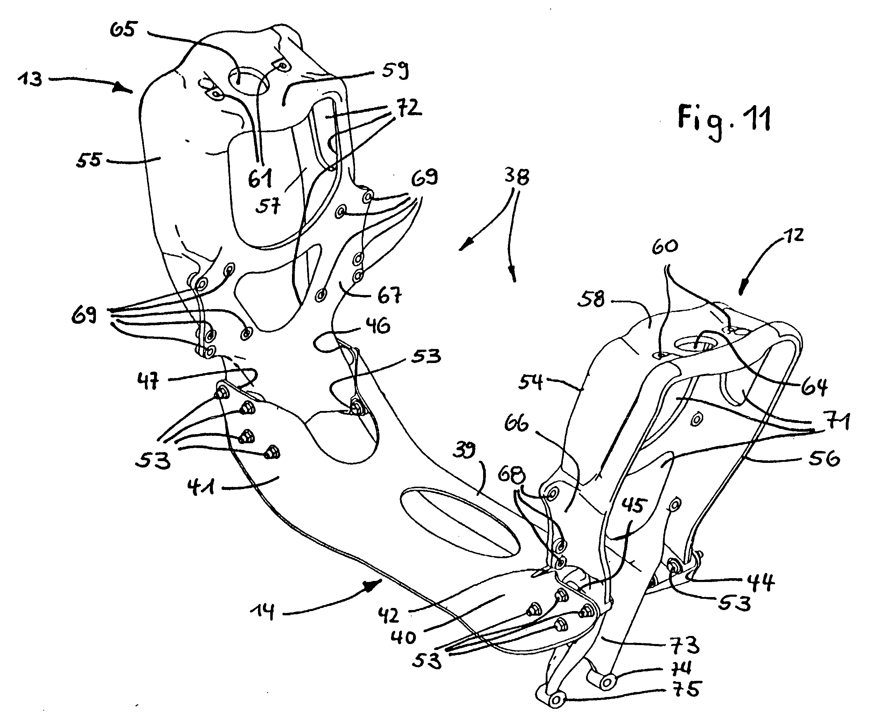

- Fig. 11: den erfindungsgemäßen Querträger in perspektivischer Alleindarstellung,

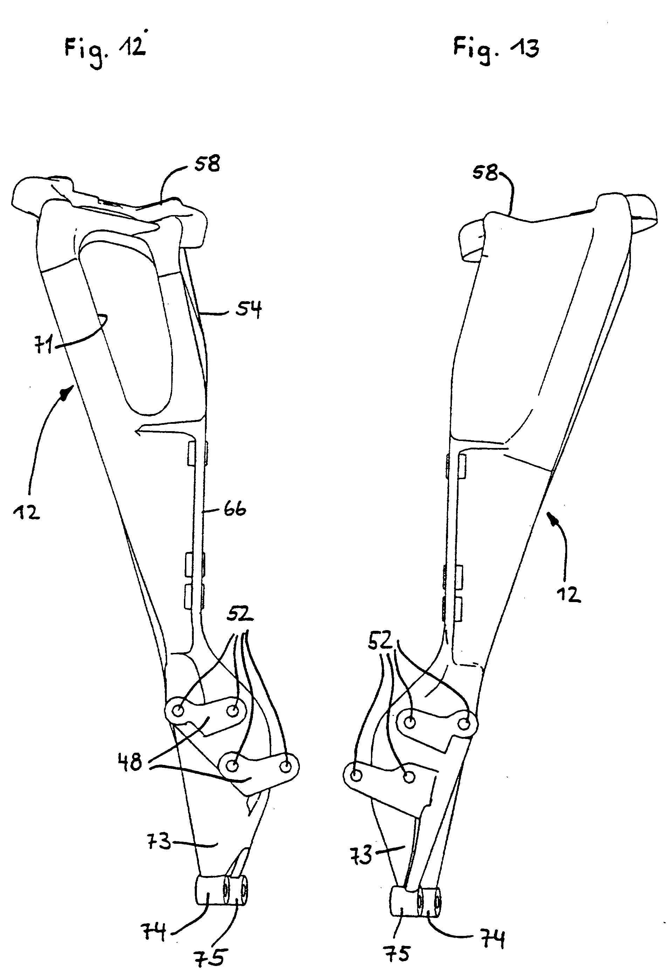

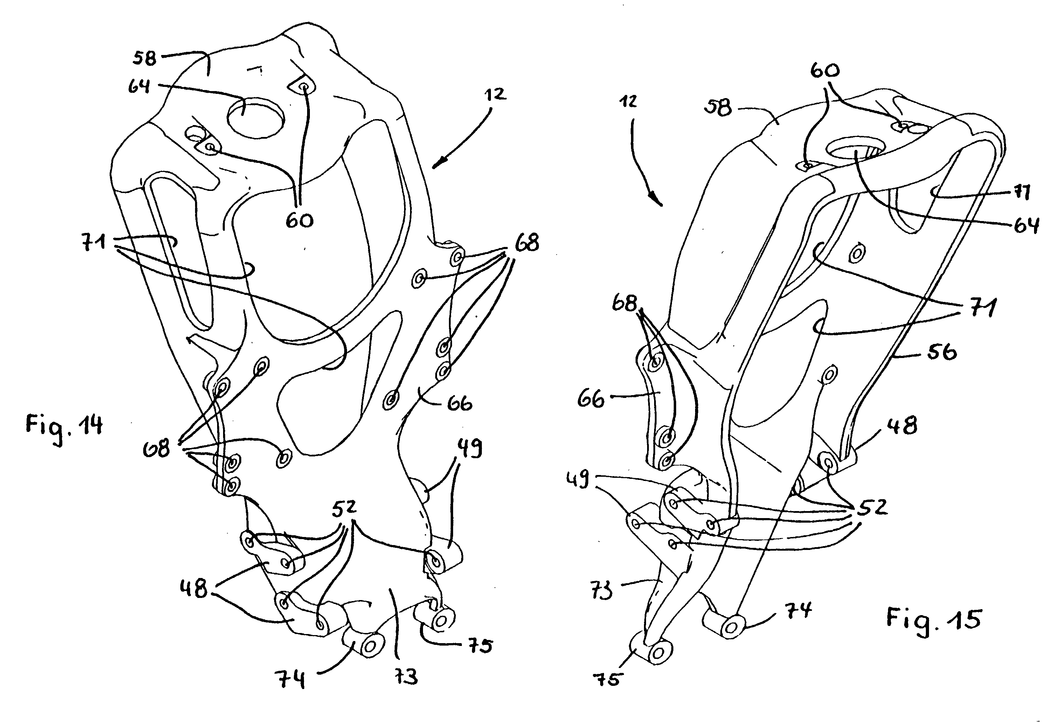

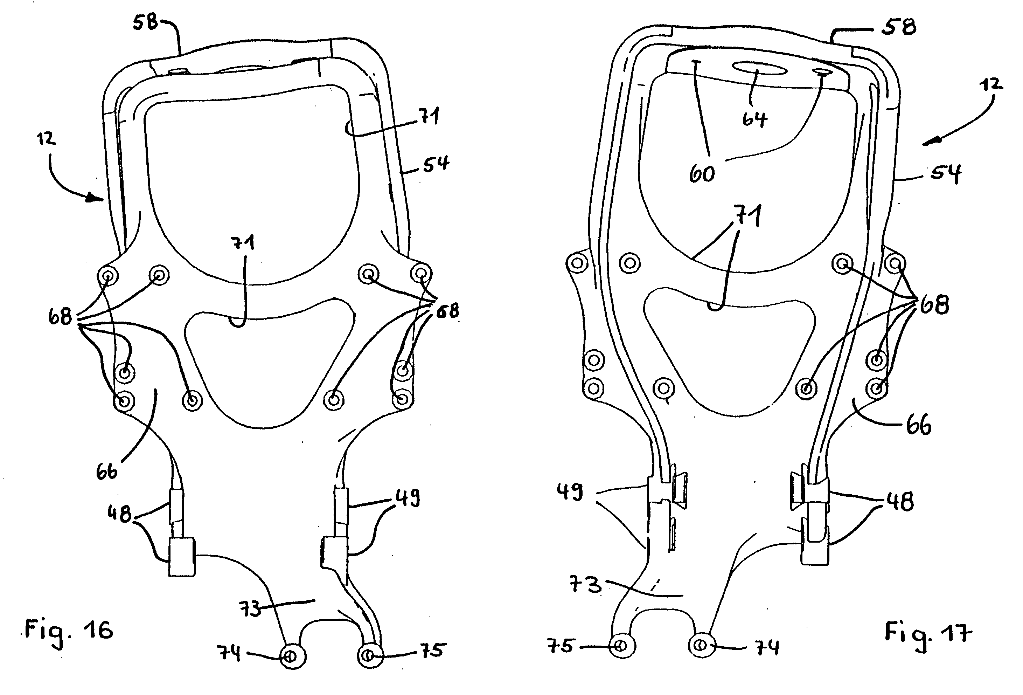

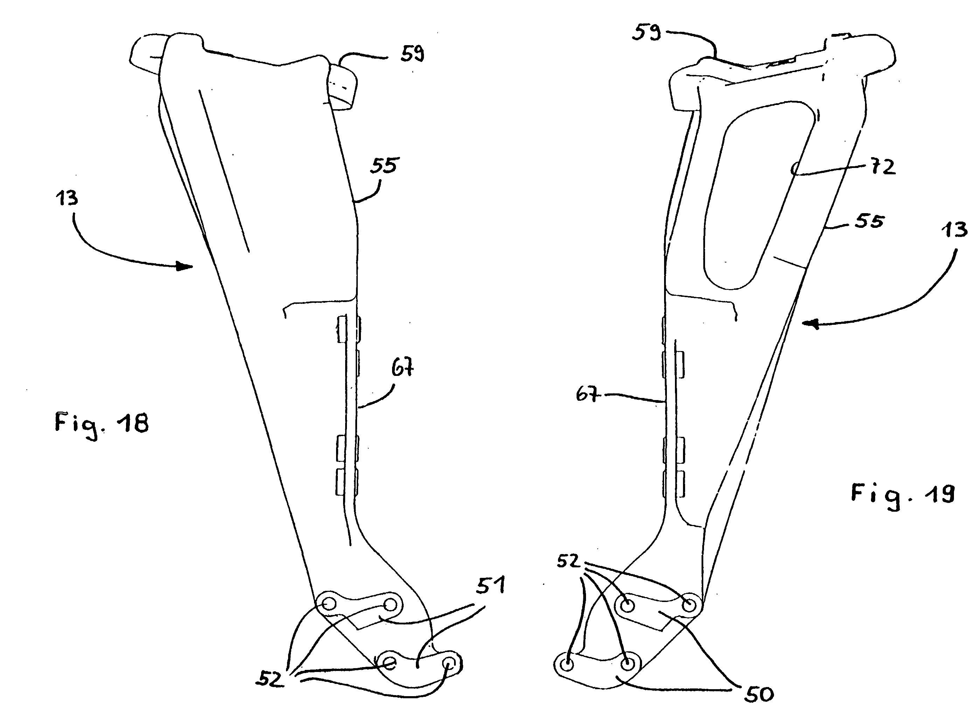

- Fig. 12 bis 17: je eine unterschiedliche Ansicht des einen der beiden Federbeinhalter aus dem erfindungsgemäßen Querträger,

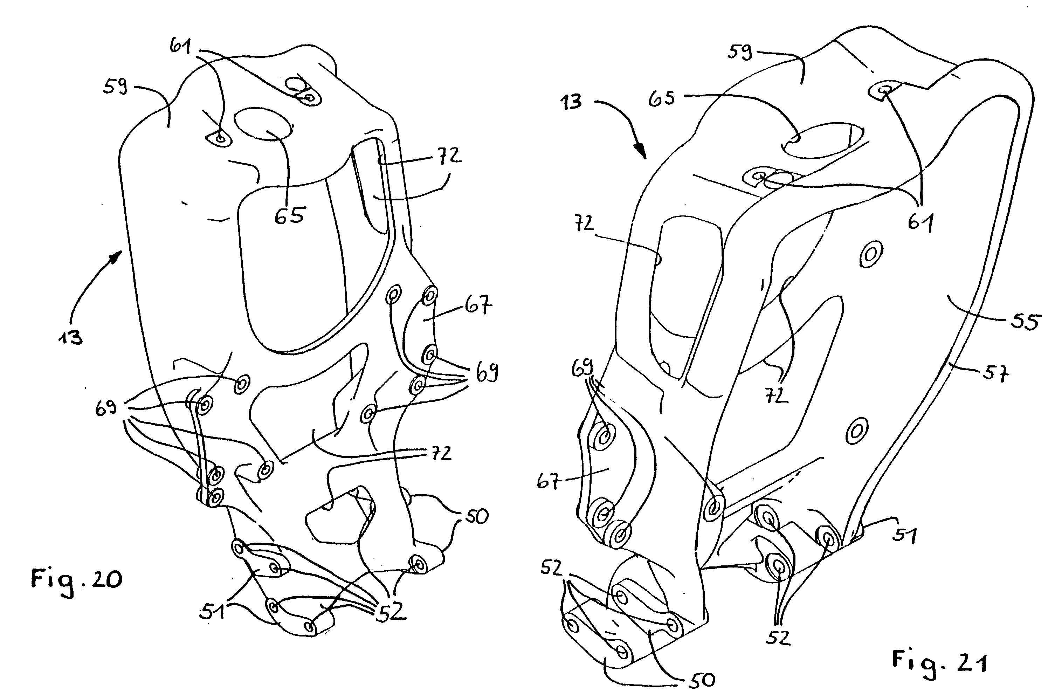

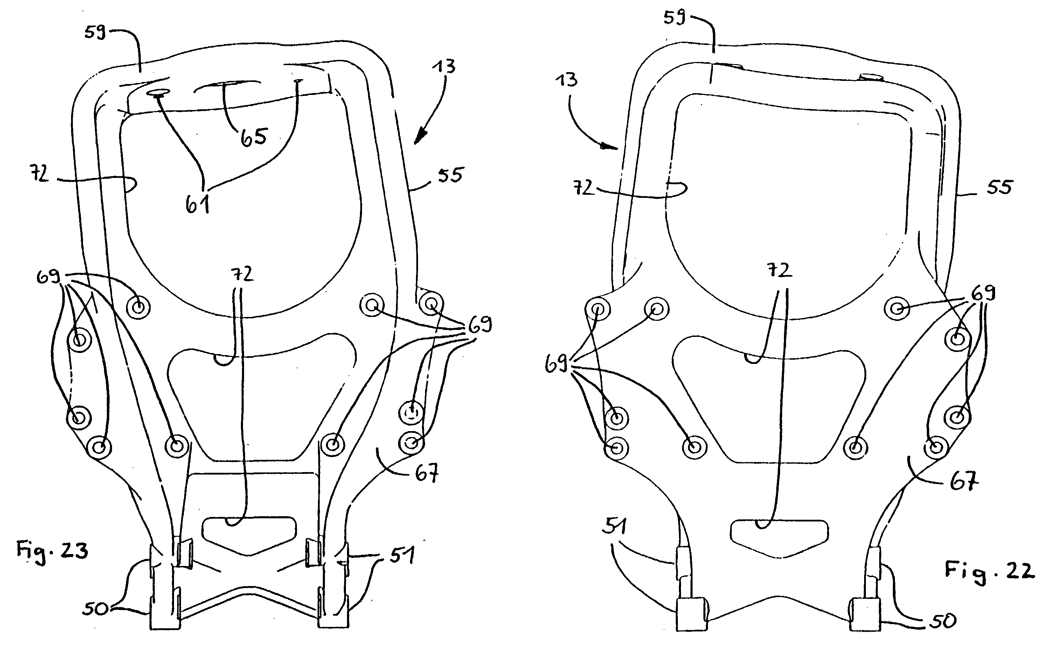

- Fig. 18 bis 23: je eine unterschiedliche Ansicht des anderen der beiden Federbeinhalter aus dem erfindungsgemäßen Querträger.

Das erfindungsgemäße Fahrgestell ist Bestandteil eines schweren Nutzfahrzeuges, bei dem es sich um einen Lastkraftwagen, insbesondere der Frontlenker-Bauart mit kippbarem Fahrerhaus, mit An- und Aufbauten der verschiedensten Art, auch solche für Spezialeinsatzzwecke, eine Sattelzugmaschine oder um einen Omnibus handeln kann. Die erfindungsgemäße Starrachse kann als Vorderachse, Nachlaufachse oder Vorlaufachse mit lenkbaren oder nicht-lenkbaren Rädern zur Anwendung kommen. In der Zeichnung ist als Beispiel für die erfindungsgemäße Starrachse eine Vorderachse aufgezeigt. Vom Fahrgestell sind in der Zeichnung als Teile des Rahmens dessen beide Längsträger mit 1 und 2 bezeichnet.

Die dargestellte Starrachse besteht einschließlich aller Aufhängungs-, Federungsund Dämpfungsorgane aus folgenden Hauptteilen, nämlich einem Starrachskörper 3, einem linken Längslenker 4 und rechten Längslenker 5, einem linken Federbein 6 mit Luft- oder Schraubenfeder 7 und hierzu koaxialem Stoßdämpfer 8, einem rechten Federbein 9 mit Luft- oder Schraubenfeder 10 und hierzu koaxialem Stoßdämpfer 11, einem Panhardstab 15 und einem - von vorne gesehen - U-förmigen Querträger 38, der sich aus einem linken Federbeinhalter 12, einem rechten Federbeinhalter 13 und einer Quertraverse 14 zusammensetzt.

In der Zeichnung sind ein linker Multifunktionslagerschild mit 16 und ein rechter Multifunktionslagerschild mit 17 bezeichnet. Jeder derselben ist außen an einem Rahmen-Längsträger 1 bzw. 2 befestigt und dient zur rahmenseitigen Anlenkung der erfindungsgemäßen Starrachse und im vorliegenden Beispiel darüber hinaus auch als Halte-, Stütz- und Lagerorgan für eine größere Anzahl anzubauender Fahrzeugteile.

Die erfindungsgemäße Starrachse bringt ihre Vorteile dann besonders zur Geltung, wenn sie - wie dargestellt - nach Art einer selbststabilisierenden Verbundlenkerachse ausgebildet ist. In diesem Fall ist die Starrachse grundsätzlich derart konstruiert, daß zu ihrer Querführung nur der Panhardstab 15 notwendig ist und sie ohne den bisher bei schweren Nutzfahrzeugen zur Beschränkung des Wankens notwendigen U-förmigen Stabilisator auskommt, aber dessen Funktion einem Bauteilverbund aufgeprägt ist, der sich aus dem Starrachskörper 3 und den beiden an diesem befestigten Längslenkern 4, 5 zusammengesetzt. Dieser Zweckbestimmung und Funktion gehorchend ist der Starrachskörper 3 in einem geraden Mittelbereich 18 zwischen den beiden an ihm angeschlossenen Längslenkern 4, 5 definiert torsionsfähig ausgebildet. Der je nach Anwendungsfall durchgehend gerade oder - wie in der Zeichnung dargestellt - nach Art einer gekröpften Faustachse ausgebildete Starrachskörper 3 wird durch Schmieden oder Gießen hergestellt und anschließend an bestimmten Stellen spanabhebend nach- bzw. endbearbeitet. Das Profil und die Größe des Querschnitts seines Mittelbereiches 18 werden im Sinne der gewünschten Torsionsfähigkeit auf den jeweiligen fahrzeugspezifischen Anwendungsfall abgestimmt. Am Übergangsbereich zwischen geradem Mittelbereich 18 und jedem beiderseits desselben anschließenden, im dargestellten Beispiel hochgekröpften Endabschnitt 19 bzw. 20 ist stirnseitig - im Fall einer gezogenen Achse vorne und im Fall einer geschobenen Achse hinten - am Starrachskörper 3 jeweils ein Ansatz bzw. Vorsprung mit nachbearbeiteter Anlagefläche 21 bzw. 22 mitangeformt, an der jeweils einer der beiden Längslenker 4, 5 mit seinen achskörperseitigen Fuß 23 bzw. 24 kraftschlüssig und gegebenenfalls auch noch formschlüssig angeflanscht ist. Die Anlagefläche 21 bzw. 22 erstreckt sich dabei mit großer Breite vorzugsweise über die ganze am Starr-achskörper 3 verfügbare Höhe, um am Starrachskörper 3 eine möglichst große Anschlußbasis für den jeweiligen Längslenker 4 bzw. 5 bereitzustellen. Zur Befestigung sind je Längslenker 4, 5 mehrere Schrauben 25, z. B. je 4 Stück, vorgesehen, die von der gegenüberliegenden Seite des Starrachskörpers 3 her durch in diesem ausgebildete Durchgangsbohrungen hindurchgeführt sowie in hierzu fluchtende Sacklochgewindebohrungen im jeweiligen Längslenker-Fuß 23 bzw. 24 eingeschraubt sind, und zwar mit einer hohen Vorspannkraft und so gesichert, daß der Starrachskörper-Längslenker-Verbund bei allen im Fahrbetrieb auftretenden Belastungen einwandfrei erhalten bleibt. Wie der Starrachskörper 3 sind auch die beiden Längslenker 4, 5 in die Stabilisatorfunktion eingebunden und dementsprechend ausgebildet. Die beiden jeweils als Gußteil, gegebenenfalls auch Schmiedeteil hergestellten und anschließend an bestimmten Stellen spanabhebend nach- bzw. endbearbeiteten Längslenker 4, 5 sind demzufolge in der Vertikalen vergleichsweise biegesteif, um ihre Längsachse aber begrenzt tordierbar ausgebildet. Generell sind die beiden Längslenker 4, 5 in diesem Fall hinsichtlich ihrer Biegesteifigkeit und Torsionsfähigkeit auf den Gesamtstabilisierungseffekt in Verbindung mit dem torsionsfähigen Starrachskörper 3 abgestimmt, und zwar über entsprechende Bemessung und Formgebung ihrer Querschnitte. Im dargestellten Beispiel weist jeder der beiden gleich langen Längslenker 4, 5 zwischen seinem Fuß 23 bzw. 24 und einem andern-endes vorhandenen Lagerauge 26 bzw. 27 einen stabförmigen Bereich mit einem sich über die Länge größenmäßig ändernden, zu dem Lagerauge 26 bzw. 27 hin kleiner werdenden Querschnitt auf. Zu dem besagten Gesamtstabilisierungseffekt trägt außerdem bei, daß die beiden Längslenker 4, 5 zur Fahrzeuglängsmittelachse spiegelsymmetrisch und - von oben betrachtet - derart gepfeilt zueinander stehend am Starrachskörper 3 angeschlossen sind, daß sie eine Trapezfläche einschließen, wobei der Abstand ihrer Lageraugen 26 bzw. 27, mit denen sie jeweils an den rahmenfest angebrachten Multifunktionslagerschilden 16 bzw. 17 angelenkt sind, kleiner ist als der Abstand ihrer achskörperseitigen Füße 23 bzw. 24. Wenn die erfindungsgemäße Starrachse in das Fahrzeug eingebaut ist, verlaufen die beiden Längslenker 4, 5 - von der Seite her betrachtet - vom Starrachskörper 3 ausgehend schräg nach oben gerichtet zu den rahmenseitigen Multifunktionslageschilden 16 bzw. 17 hin.

Mir der erfindungsgemäßen Starrachse läßt sich im Fahrbetrieb ein für ein Nutzfahrzeug sehr hoher Fahr- und Federungskomfort erzielen. Dieser erreicht ein Optimum, wenn die größtmögliche Federspur festgelegt ist, das heißt, jedes der beiden Federbeine 6 bzw. 9 an seinem unteren Ende z. B. über ein in ein dortiges Lagerauge 28 bzw. 29 eingebautes Pratzengelenk 30 bzw. 31 an einer achskörperfesten Lagerstelle angelenkt ist, die räumlich im Bereich zwischen einem Längslenker 4 bzw. 5 und einem benachbarten achskörperendigen Radträger-Anschlußkopf 34 bzw. 35 so weit wie möglich zu letzterem hin gerückt angeordnet und jeweils durch einen am Starrachskörper 3 angebauten oder mitangeformten maulartigen Bock 32 bzw. 33 gebildet ist. Zu diesem hohen Fahr- und Federungskomfort trägt auch bei, daß die beiden Federbeine 6 bzw. 9 - von vorne gesehen - gepfeilt zueinander eingebaut sind, derart, daß ihre oberen Enden 36 bzw. 37 weniger weit voneinander beabstandet sind als ihre untenendigen Lageraugen 28 bzw. 29. Von der Seite her gesehen steht jedes Federbein 6 bzw. 9 entweder vertikal oder, je nach dem, ob es sich um eine geschobene oder - wie dargestellt - gezogene Starrachse handelt, leicht nach vorn oder hinten geneigt.

Mit seinem oberen Ende 36 bzw. 37 ist jedes Federbein 6 bzw. 9 räumlich oberhalb und seitlich außerhalb des benachbarten Rahmenlängsträgers 1 bzw. 2 an einem der beiden Federbeinhalter 12 bzw. 13 abgestützt und befestigt. Die beiden Federbeinhalter 12 bzw. 13 bilden erfindungsgemäß zusammen mit der Quertraverse 14 den - von vorne gesehen - U-förmigen Querträger 38, der mit seiner Quertraverse 14 den Starrachskörper 3 und den Panhardstab 15 oben mit geringem Abstand dachbildend überbrückt und außerdem die beiden Rahmen-Längsträger 1, 2 stabilisierend miteinander verbindet.

Innerhalb des Querträgers 38 ist die Quertraverse 14 durch ein im Querschnitt hutförmiges Blechpreßteil, gegebenenfalls auch Schmiede- oder Gußteil, gebildet, das einen geraden Mittelabschnitt 39 und beiderseits desselben je einen schräg hochgezogenen Endabschnitt 40 bzw. 41 aufweist. Dessen äußere Enden sind nach Art eines Maules ausgebildet, mit dem der anzuschließende Federbeinhalter 12 bzw. 13 außen übergriffen wird. Jedes Maul wird durch einen Ausschnitt 42 bzw. 43 im Obergurt der Quertraverse 14 und beiderseits jedes Ausschnitts 42 bzw. 43 verbleibende Wangen 44, 45 bzw. 46, 47 gebildet, denen am jeweiligen Federbeinhalter 12 bzw. 13 vorn und hinten zugehörige Anlageflächen 48, 49 bzw. 50, 51 zugeordnet sind. Im Bereich dieser Anlageflächen 48, 49 bzw. 50, 51 ist die Quertraverse 14 mit ihren Wangen 44, 45 bzw. 46, 47 abgestützt und dort durch entsprechende Bohrungen bzw. Löcher 52 durchdringende Schrauben 53 mit dem jeweiligen Federbeinhalter 12 bzw. 13 fest verbunden. In der Mitte seines Obergurtes kann die Quertraverse 14 zur Gewichtsreduzierung einen oder mehrere Durchbrüche aufweisen.

Die beiden Federbeinhalter 12 bzw. 13 sind vorzugsweise jeweils durch ein Stahlgußteil realisiert, das nach dem Abguß an erforderlichen Stellen spanabhebend nach - bzw. endbearbeitet wird. Jeder Federbeinhalter 12 bzw. 13 ist dabei, was seine Form anbelangt, zumindest in seinem oberen Bereich nach Art einer nach außen offenen Halbschale 54 bzw. 55 ausgebildet, von deren Begrenzungswand 56 bzw. 57 das zugehörige Federbein 6 bzw. 9 im Bereich seiner Luft- oder Schraubenfeder 7 bzw. 10 radial außen mit geringem Abstand von innen her partiell überdeckt wird und an deren Kopfplatte 58 bzw. 59 das jeweilige Federbein 6 bzw. 9 obenendig abgestützt und mittels je zwei Löcher 60 bzw. 61 durchdringenden Verschraubungen 62 bzw. 63 befestigt ist. Ein Zentralloch 64 bzw. 65 in der Federbein-Kopfplatte 58 bzw. 59 dient zur Zentrierung des jeweiligen Federbeines 12 bzw. 13 und freien Durchtritt von dessen oberem Ende 36 bzw. 37. Etwa in seinem mittleren Höhen-Bereich weist jeder Federbeinhalter 12 bzw. 13 außenseitig an der Halbschale 54 bzw. 55 anschließend einen Anschlußflansch 66 bzw. 67 mit mehreren Schraubenlöchern 68 bzw. 69 auf. Mit den jeweiligen Anschlußflansch 66 bzw. 67, der etwa im Schubmittelpunkt gegeben ist, ist jeder der beiden Federbeinhalter 12 bzw. 13 außen am zugehörigen Rahmen-Längsträger 1 bzw. 2 angeflanscht und dort jeweils mittels mehrerer die Löcher 68 bzw. 69 und hierzu längsträgerintern fluchtende Löcher durchdringender Schrauben 70 mit zugehörigen Muttern befestigt. Verschiedene Durchbrüche 71 bzw. 72 in den Federbeinhaltern 12 bzw. 13 dienen zu deren Gewichtsreduzierung.

Einem der beiden Federbeinhalter 12 bzw. 13 ist über seine eigentliche Funktion hinaus eine weitere Funktion aufgeprägt, nämlich jene, das Abstütz-, Halte- und Anlenkorgan für das eine Ende des Panhardstabes 15 zu bilden. Zu diesem Zweck ist der betreffende Federbeinhalter 12 bzw. 13 nach unten durch ein Lagerschild 73 verlängert, an dessen unterem Ende ein Maul und beiderseits desselben je ein Lagerauge 74 bzw. 75 ausgebildet sind, an denen der Panhardstab 15 über ein in sein einenendiges Lagerauge 76 eingebautes Pratzengelenk 77 abstützt und mittels Schrauben 78 befestigt ist.

Mit seinem anderen, gegenüberliegenden Ende ist der Panhardstab 15 z. B. über ein in das dortige Lagerauge 79 eingebautes Pratzengelenk 80 an geeigneter Stelle des Starrachskörper-Längslenker-Verbundes angelenkt. Für den Fall der Anlenkung am Starrachskörper 3 ist an diesem ein Anschlußbock befestigt oder mitangeformt, an dem eine entsprechende Anlagefläche und Gewindebohrungen für die Anschraubung des Pratzengelenkes 80 angearbeitet sind. Im dargestellten Beispiel ist als Anlenkstelle einer der beiden Längslenker 4 bzw. 5 gewählt. Demzufolge ist an diesem ein seitlich nach innen vorspringender maulartiger Lagerbock 81 befestigt oder - wie dargestellt - mitangeformt, der eine äußere stirnseitige Anlagefläche und zwei interne Sackgewindelöcher für die Abstützung des Pratzengelenkes 80 und dessen Befestigung mittels Schrauben 82 aufweist. Der als im wesentlichen gerader Stab mit den endseitig angeschmiedeten Lageraugen 76, 79 ausgebildete Panhardstab 15 erstreckt sich aufgrund seiner wie vorstehend beschriebenen Anlenkung annähernd parallel oder leicht schräg zum Mittelbereich 18 des Starrachskörpers 3 verlaufend.

Die beiden Multifunktionslagerschilde 16, 17 weisen jeweils einen zur Fahrzeugmitte hin abragenden Vorsprung 83 bzw. 84 auf, in dessen von außen freiem Innenraum eine Anlenkstelle für die Starrachse gegeben ist, und zwar in Form einer Anlagefläche und einer Querbohrung 85, in die bei Montage ein das vordere Längslenker-Lagerauge 26 bzw. 27 durchdringender Lagerbolzen eingebaut und anschließend jede dieser beiden Lagerstellen von außen her durch einen mittels mehrerer Schrauben 86 am Multifunktionslagerschild 16 bzw. 17 befestigten Deckel 87 gesichert wird.

## Patentansprüche

1. Fahrgestell eines schweren Nutzfahrzeuges, mit einem Rahmen, dessen beide Längsträger (1, 2) über mehrere Querträger miteinander verbunden sind, und mit mehreren Achsen, von denen wenigstens eine eine Starrachse ist, über deren Starrachskörper (3) sich ein von vorne gesehen U-förmiger Querträger (38) erstreckt, der die beiden Rahmen-Längsträger (1, 2) miteinander verbindet und mit seiner Quertraverse (14) dachbildend auch einen darunter verlaufenden Panhardstab (15) überbrückt, **gekennzeichnet durch** folgende Merkmale:
a) je Achsseite ist ein aus einer Luft- oder Schraubenfeder (7, 10) und einem hierzu koaxialen Stoßdämpfer (8, 11) bestehendes Federbein (6, 9) vorgesehen,
b) jedes Federbein (6, 9) ist mit seinem oberen Ende (36, 37) an einem zugehörigen Federbeinhalter (12, 13) und mit seinem unteren Ende (28, 29) an einer Anlenkstelle (32, 33) am Starrachskörper (3) angeschlossen,
c) der U-förmige Querträger (38) besteht aus drei Teilen, nämlich der dachbildend den Starrachskörper (3) und den zur Starrachs-Querführung dienenden Panhardstab (15) mit geringem Abstand überbrückenden Quertraverse (14) und den beiden, an den Enden der Quertraverse (14) angeschlossenen Federbeinhaltern (12, 13),
d) der links- und rechtsseitige Außenbereich der Quertraverse (14) des U-förmigen Querträgers (38) ist nach Art eines Maules ausgebildet, in das ein Federbeinhalter (12, 13) mit einem Anschlussbereich eingepasst und dort an der Quertraverse (14) befestigt ist.

2. Fahrgestell nach Anspruch 1, **dadurch gekennzeichnet, dass** die Quertraverse (14) des U-förmigen Querträgers (38) durch ein im Querschnitt hutförmiges Blechpress-, Gussoder Schmiedeteil gebildet ist, und dass in dessen links- und rechtsseitigem, nach Art eines Maules ausgebildeten Außenbereich je ein mit seinem Anschlussbereich eingepasster Federbeinhalter (12, 13) mittels mehrerer Schrauben (53) an der Quertraverse (14) befestigt ist.

3. Fahrgestell nach einem der vorhergehenden Ansprüche, **dadurch gekennzeichnet, dass** die Quertraverse (14) des U-förmigen Querträgers (38) einen geraden Mittelabschnitt (39), mit dem sie den Starrachskörper (3) und den Panhardstab (15) mit geringem Abstand überdeckt, und beiderseits des Mittelabschnitts (39) je einen schräg hochgezogenen Endabschnitt (40, 41) aufweist, dessen Ende nach Art eines Maules ausgebildet ist.

4. Fahrgestell nach einem der vorhergehenden Ansprüche, **dadurch gekennzeichnet, dass** jedes zum Anschluss eines Federbeinhalters (12, 13) vorgesehene Maul im Querträger (14) durch einen endseitigen Ausschnitt (42, 43) im Obergurt der Quertraverse (14) und beiderseits jedes Ausschnitts (42, 43) verbleibende Wangen (44, 45; 46, 47) gebildet ist, denen am jeweiligen Federbeinhalter (12, 13) vorn und hinten zugehörige Anlageflächen (48, 49 bzw. 50, 51) zugeordnet sind, in deren Bereich die Quertraverse (14) mit ihren Wangen (44, 45; 46, 47) abgestützt und dort auch entsprechende Bohrungen bzw. Löcher (52) durchdringende Schrauben (53) mit dem der jeweilige Federbeinhalter (12, 13) fest verbunden ist.

5. Fahrgestell nach einem der vorhergehenden Ansprüche, **dadurch gekennzeichnet, dass** in der Quertraverse (14) und den Federbeinhaltern (12, 13) des U-förmigen Querträgers (38) an geeigneten Stellen zur Gewichtsreduzierung dienende Löcher oder Durchbrüche vorgesehen sind.

6. Fahrgestell nach einem der vorhergehenden Ansprüche, **dadurch gekennzeichnet, dass** einem der beiden Federbeinhalter (12, 13) über seine eigentliche Funktion hinaus noch jene Funktion aufgeprägt ist, nämlich das rahmenfeste Abstütz-, Halte- und Anlenkorgan für das eine Ende des Panhardstabes (15) zu bilden.

7. Fahrgestell nach Anspruch 6, **dadurch gekennzeichnet, dass** einer der beiden Federbeinhalter (12, 13) nach unten durch ein Lagerschild (73) verlängert ist, an dessen unterem Ende ein Maul und beiderseits desselben je ein Lagerauge (74, 75) ausgebildet sind, an denen der Panhardstab (15) über ein in seinem einenendigen Lagerauge (76) eingebautes Pratzengelenk (77) und zugehörige Schrauben (78) befestigt ist, und dass der Panhardstab (15) mit seinem anderen, gegenüberliegenden Ende über ein in das dortige Lagerauge (79) eingebautes Pratzengelenk (80) an geeigneter Stelle des Starrachskörper-Längslenker-Verbundes angelenkt ist.

8. Fahrgestell nach Anspruch 7, **dadurch gekennzeichnet, dass** der Panhardstab (15) achsseitig über das Pratzengelenk (80) an einem Lagerbock (81) angeschlossen ist, der entweder am Achskörper (3) oder einem der beiden Längslenker (4, 5) entweder mitangeformt oder dort angebaut ist und an dem eine entsprechende Anlagefläche und Gewindebohrungen für die Anschraubung des Pratzengelenkes (80) mittels Schrauben (82) vorgesehen sind.

9. Fahrgestell nach einem der vorhergehenden Ansprüche, **dadurch gekennzeichnet, dass** jeder Federbeinhalter (12, 13) zumindest in seinem oberen Bereich nach Art einer nach außen offenen Halbschale (54, 55) ausgebildet ist, von deren Begrenzungswand (56, 57) das zugehörige Federbein (6, 9) im Bereich seiner Luft- oder Schraubenfeder (7, 10) radial außen mit geringem Abstand von innen her partiell überdeckt wird und an deren Kopfplatte (58, 59) das jeweilige Federbein (6, 9) obenendig abgestützt und mittels je zwei Löcher (60, 61) durchdringenden Verschraubungen (62, 63) befestigt ist, wobei ein Zentralloch (64, 65) in der Federbein-Kopfplatte (58, 59) zur Zentrierung des jeweiligen Federbeines (12, 13) und freien Durchtritt von dessen oberem Ende (36, 37) dient.

10. Fahrgestell nach Anspruch 9, **dadurch gekennzeichnet, dass** jeder Federbeinhalter (12, 13) etwa in seinem mittleren Höhenbereich einen außenseitig an der Halbschale (54, 55) anschließenden Anschlussflansch (66, 67) mit mehreren Schraubenlöchern (68, 69) aufweist, dass dieser Anschlussflansch (66, 67) etwa im Schubmittelpunkt gegeben ist, und dass jeder Federbeinhalter (12, 13) mit seinem Anschlussflansch (66, 67) über die Schraubenlöcher (68, 69) und hierzu längsträgerintern fluchtende Löcher durchdringende Schrauben (70) und zugehörigen Muttern am jeweiligen Rahmen-Längsträger (1, 2) angeflanscht befestigt ist.

11. Fahrgestell nach einem oder mehreren der vorhergehenden Ansprüche, **dadurch gekennzeichnet, dass** die Starrachse nach Art einer selbststabilisierenden Verbundlenkerachse ausgebildet und die Funktion eines das Wanken des Nutzfahrzeuges begrenzenden Stabilisators einem Bauteilverbund aufgeprägt ist, der aus dem Starrachskörper (3) und zwei fest an diesem angeschlossenen Längslenkern (4, 5) besteht, wobei
- die beiden Längslenker (4, 5) weit voneinander beabstandet jeweils stirnseitig vorn oder hinten am Starrachskörper mittels Schrauben (25) kraft- und gegebenenfalls auch formschlüssig angeflanscht sind,
- der Starrachskörper (3) in einem geraden Mittelbereich (18) zwischen den angeschlossenen Längslenkern (4, 5) definiert torsionsfähig ausgebildet ist,
- die beiden Längslenker (4, 5) in Vertikalrichtung gesehen vergleichsweise biegesteif, um ihre Längsachse aber begrenzt tordierbar ausgebildet und hinsichtlich ihrer Biegesteifigkeit sowie Torsionsfähigkeit auf den Gesamtstabilisierungseffekt in Verbindung mit dem torsionsfähigen Starrachskörper (3) abgestimmt sind durch entsprechende Bemessung und Formgebung der hierfür maßgeblichen Querschnitte,
- diese Verbundlenkerachse mit den freien Enden ihrer beiden Längslenker (4, 5) an rahmenfesten Lagerstellen (16, 17) angelenkt ist, und
- die je Achsseite eine Anlenkstelle (32, 33) für das untere Ende (28, 29) eines Federbeines (6, 9) am Starrachskörper (3) so weit wie möglich zu einem außenendigen Radträger-Anschlusskopf (34, 35) hingerückt angeordnet ist, dass sich eine größtmögliche Federspur und eine - von vorne gesehen - gepfeilte Anordnung der beiden Federbeine (6, 9) ergibt, bei der die oberen Enden (36, 37) derselben weniger weit voneinander beabstandet sind als deren untere Enden (28, 29).

## Claims

1. A chassis of a heavy-duty commercial vehicle with a frame whose two longitudinal members (1, 2) are connected with each other by means of several cross-members, and with several axles, of which at least one is a rigid axle over whose rigid axle beam (3) a cross-member (38) - U-shaped when viewed from the front - extends, joining the two longitudinal frame members (1, 2) with each other, and which also, forming a cover, spans, with its transverse beam (14), a Panhard rod (15) extending below the latter, **characterised by** the following features:
a) a spring strut (6, 9), provided on each axle side, and consisting of an air or helical spring (7, 10) and of a shock absorber (8, 11) arranged coaxially to the latter
b) the upper end (36, 37) of each spring strut (6, 9) being connected to an associated spring strut holder (12, 13), the lower end (28, 29) of each spring strut (6, 9) being connected to an articulation point (32, 33) on the rigid axle beam (3)
c) the U-shaped cross-member (38) consisting of three parts, namely the transverse beam (14) covering and, with but a slight clearance, spanning the rigid axle beam (3) and the Panhard rod (15), the latter also providing transversal guidance to the rigid axle, and the two longitudinal frame members (1, 2) connected to the ends of the transverse beam (14)
d) the left and right outer sections of the transverse beam (14) belonging to the U-shaped cross-member (38) each being shaped like a jaw so that a spring strut holder (12, 13) with a connecting surface fits into it, said spring strut holder (12, 13) being fastened there to the transverse beam (14).

2. A chassis according to claim 1, **characterised in that** the transverse beam (14) belonging to the U-shaped cross-member (38) consists of a sheet steel stamping or of a forged or cast part, with a hat-shaped cross-section, and that on the left and right outer sections of the transverse beam (14), each shaped like a jaw, each of the spring strut holders (12, 13) is fitted to the transverse beam (14) via its connecting surface by means of several bolts (53).

3. A chassis according to one of the foregoing claims, **characterised in that** the transverse beam (14) belonging to the U-shaped cross-member (38) has a straight central area (39) with which it covers the rigid axle beam (3) and the Panhard rod (15) with but a slight clearance, and has, on each side of said central area (39), an obliquely upwards-curved end section (40, 41), the end of which is shaped like a jaw.

4. A chassis according to one of the foregoing claims, **characterised in that** each jaw, intended for the connection of a spring strut holder (12, 13), on the transverse beam (14) is formed by a notch (42, 43) in the extremity of the upper flange of the transverse beam (14) and by cheeks (44, 45; 46, 47) remaining on each side of each notch (42, 43), to which cheeks associated contact surfaces (48, 49; 50, 51) on the front and rear of the respective spring strut holders (12, 13) are assigned, in the area of which contact surfaces (48, 49; 50, 51) the transverse beam (14) is supported by its cheeks (44, 45; 46, 47) and firmly connected with the respective spring strut holders (12, 13) by means of bolts (53) passing through the corresponding drill and bolt holes (52) provided in said contact surfaces.

5. A chassis according to one of the foregoing claims, **characterised in that** holes or openings are provided at suitable points in the transverse beam (14) and in the spring strut holders (12, 13) of the U-shaped cross-member (38) for the purpose of weight reduction.

6. A chassis according to one of the foregoing claims, **characterised in that**, in addition to its proper function, one of the two spring strut holders (12, 13) incorporates an additional function, namely that of being a frame-mounted supporting, retaining, and coupling element for one end of the Panhard rod (15).

7. A chassis according to claim 6, **characterised in that** one of the two spring strut holders (12, 13) is extended downwards by means of a bearing bracket (73) at whose lower end a jaw and, at either side of said jaw, bearing eyes (74, 75) are provided, to which bearing eyes (74, 75) the Panhard rod (15) is fastened by means of a claw-type joint (77) installed in a bearing eye (76) provided at one of its ends and by associated bolts (78), and that the other, opposite extremity of the Panhard rod (15) is coupled to a suitable point on the assembly consisting of the rigid axle beam and the longitudinal arms by means of a claw-type joint (80) installed in the bearing eye (79) located at said opposite extremity.

8. A chassis according to claim 7, **characterised in that** the Panhard rod (15) is connected, by means of the claw-type joint (80), to a bearing support (81) associated with the axle, which bearing support is either an integral part of the axle beam (3) or of one of the two longitudinal arms (4, 5) or is mounted thereon, and on which an appropriate contact surface and threaded drill holes are provided for the attachment of the claw-type joint (80) by means of bolts (82).

9. A chassis according to one of the foregoing claims, **characterised in that** each of the spring strut holders (12, 13) is, at least in its upper area, designed as a half shell (54, 55) open towards the outside, the associated spring strut (6, 9), in the area of its air or helical spring (7, 10), being partially covered radially on the outside, and with but small clearance from the inside, by the limiting wall (56, 57) of said half shell, by whose covering plate (58, 59) the upper end of each spring strut (6, 9) is supported and on which it is fastened by means of bolted connections (62, 63), each passing through two holes (60, 61), a central hole (64, 65) in the spring strut covering plate (58, 59) being provided for centring each spring strut (12, 13) and for the free passage of its upper end (36, 37).

10. A chassis according to claim 9, **characterised in that** each of the spring strut holders (12, 13) has, approximately halfway up, a connecting flange (66, 67) with several bolt holes (68, 69) that is joined to the outside of the half shell (54, 55), that said connecting flange (66, 67) is located roughly in the thrust centre, and that each of the spring strut holders (12, 13) is flanged onto the respective longitudinal frame member (1, 2) by means of its connecting flange (66, 67), with the aid of bolts (70) and associated nuts, said bolts passing through the bolt holes (68, 69) and through the holes aligned to these on the inside of the longitudinal member.

11. A chassis according to one or more of the foregoing claims, **characterised in that** the rigid axle is designed as a self-stabilising twist-beam axle, and that the function of a stabilizer limiting the rolling motion of the commercial vehicle is invested in an assembly consisting of the rigid axle beam (3) and of two longitudinal arms (4, 5) firmly attached to the latter,
- the two longitudinal arms (4, 5) being spaced a wide distance apart, the front face of each of them being flanged onto the front or rear side of the rigid axle beam in a non-positive or, if necessary, in a positive connection by means of bolts (25)
- the rigid axle beam (3) being designed to have a defined torsional capability in a straight central area (18) located between the attached longitudinal arms (4, 5)
- the two longitudinal arms (4, 5), if viewed vertically, being designed to have comparatively great flexural strength but limited torsional capability about their longitudinal axis and, in respect of their flexural strength and torsional capability, being adapted to the overall stabilising effect in conjunction with the torsion-capable rigid axle beam (3) through the suitable dimensioning and shaping of the cross-sections crucial to this
- said twist-beam axle being coupled to frame-mounted bearing supports (16, 17) at the free ends of its two longitudinal arms (4, 5), and
- an articulation point (32, 33) being provided for the lower end (28, 29) of a spring strut (6, 9), said articulation point being arranged on each axle side of the rigid axle beam (3), and positioned as closely as possible to a wheel-bearing connecting head (34, 35) located on an outer extremity, so as to permit a maximum possible spring track and - when viewed from the front - so as to produce a convergent arrangement of the two spring struts (6, 9), in which the upper ends (36, 37) of the latter are less far apart than the lower ends (28, 29).

## Revendications

1. Châssis de véhicule utilitaire lourd à un cadre dont les deux longerons (1, 2) sont reliés par plusieurs traverses et à plusieurs essieux dont l'un au moins est un essieu rigide sur le corps (3) duquel s'étend un berceau (38) ayant, vu de l'avant, la forme d'un U, lequel relie les deux longerons (1, 2) du cadre et dont la traverse (14) recouvre également en toit une barre Panhard (15) située dessous, **caractérisé en ce que** :
a) une jambe McPherson (6, 9) constituée d'un ressort pneumatique ou hélicoïdal (7, 10) et d'un amortisseur (8, 11) qui lui est coaxial est prévue de chaque côté de l'essieu,
b) chaque jambe McPherson (6, 9) est raccordée, à son extrémité supérieure (36, 37), à un montant associé (12, 13) et, à son extrémité inférieure (28, 29), à un point d'articulation (32, 33) situé sur le corps d'essieu rigide (3),
c) le berceau en U (38) se compose de trois parties, à savoir la traverse (14) surmontant en toit, avec un faible écart, le corps d'essieu (3) et la barre Panhard (15) servant au guidage transversal de l'essieu, ainsi que les deux montants de jambe McPherson (12, 13) raccordés aux extrémités de la traverse (14),
d) les zones extérieures gauche et droite de la traverse (14) du berceau en U (38) se présentent à la manière d'une mâchoire dans laquelle s'insère par une zone de raccordement un montant de jambe McPherson (12, 13) et où ce dernier est fixé à la traverse (14).

2. Châssis suivant la revendication 1, **caractérisé en ce que** la traverse (14) du berceau en U (38) est constituée d'une pièce emboutie, moulée ou forgée à section en forme de chapeau et que dans ses zones extérieures gauche et droite se présentant à la manière d'une mâchoire, est fixé à la traverse (14), au moyen de plusieurs vis (53), un montant de jambe McPherson (12, 13) s'y insérant par sa zone de raccordement.

3. Châssis suivant l'une des revendications précédentes, **caractérisé en ce que** la traverse (14) du berceau en U (38) présente une partie médiane droite (39), avec laquelle elle recouvre avec un faible écart le corps d'essieu (3) ainsi que la barre Panhard (15), et, de part et d'autre de la partie médiane (39), une partie terminale relevée en biais (40, 41), dont l'extrémité se présente à la manière d'une mâchoire.

4. Châssis suivant l'une des revendications précédentes, **caractérisé en ce que** chaque mâchoire prévue pour le raccordement d'un montant de jambe McPherson (12, 13) est constituée d'une découpe (42, 43) pratiquée à l'extrémité de la membrure supérieure de la traverse (14) et de joues (44, 45 ; 46, 47) laissées de part et d'autre de chaque découpe (42, 43), auxquelles sont associées, à l'avant et à l'arrière du montant de jambe McPherson considéré (12, 13), des portées (48, 49 ; 50, 51) au niveau desquelles s'appuie la traverse (14) par ses joues (44, 45 ; 46, 47) et où elle est fixée au montant de jambe McPherson considéré (12, 13) par des vis (53) passant dans des trous correspondants (52).

5. Châssis suivant l'une des revendications précédentes, **caractérisé en ce que** des trous ou ajours servant à réduire le poids sont prévus en des points appropriés dans la traverse (14) et les montants de jambe McPherson (12, 13) du berceau en U (38).

6. Châssis suivant l'une des revendications précédentes, **caractérisé en ce que** l'un des deux montants de jambe McPherson (12, 13) se voit assigner, en plus de sa fonction proprement dite, celle de constituer l'organe solidaire du cadre servant d'appui, de retenue et d'articulation de l'une des extrémités de la barre Panhard (15).

7. Châssis suivant la revendication 6, **caractérisé en ce que** l'un des deux montants de jambe McPherson (12, 13) est prolongé vers le bas par un flasque (73), à l'extrémité inférieure duquel sont ménagés une mâchoire et, de part et d'autre de cette dernière, un coussinet (74, 75), auxquels est fixée la barre Panhard (15) par une articulation à griffes (77) montée dans un coussinet (76) prévu à une extrémité ainsi que par des vis associées (78), et que la barre Panhard (15) est raccordée à son autre extrémité opposée, par l'intermédiaire d'une articulation à griffes (80) montée dans le coussinet (79) prévu à ce niveau, en un point approprié de l'ensemble corps d'essieu rigide/bras longitudinaux.

8. Châssis suivant la revendication 7, **caractérisé en ce que** la barre Panhard (15) est raccordée côté essieu par l'intermédiaire de l'articulation à griffes (80) à un support (81) qui est soit venu de fonderie soit rapporté soit sur le corps d'essieu (3) soit sur l'un des deux bras longitudinaux (4, 5) et sur lequel sont prévus une portée et des trous taraudés adéquats pour le vissage de l'articulation à griffes (80) au moyen de vis (82).

9. Châssis suivant l'une des revendications précédentes, **caractérisé en ce que** chaque montant de jambe McPherson (12, 13) se présente, au moins à sa partie supérieure, à la manière d'une demi-coque ouverte vers l'extérieur (54, 55), dont l'enveloppe (56, 57) recouvre partiellement la jambe McPherson associée (6, 9) au niveau de son ressort pneumatique ou hélicoïdal (7, 10), radialement vers l'extérieur et à faible distance de l'intérieur, et sur la chapelle (58, 59) de laquelle s'appuie à son extrémité supérieure la jambe McPherson considérée (6, 9) et à laquelle elle est fixée au moyen de boulons (62, 63) passant par deux trous (60, 61), un trou central (64, 65) pratiqué dans la chapelle (58, 59) servant à centrer la jambe McPherson considérée (12, 13) et à laisser passer son extrémité supérieure (36, 37).

10. Châssis suivant la revendication 9, **caractérisé en ce que** chaque montant de jambe McPherson (12, 13) présente, à peu près au milieu de sa hauteur, une bride de raccordement (66, 67) en saillie vers l'extérieur de la demi-coque (54, 55) et pourvue de plusieurs trous de vis (68, 69), que cette bride de raccordement (66, 67) se situe approximativement au centre de poussée et que chaque montant de jambe McPherson (12, 13) est fixé au longeron considéré (1, 2) par sa bride de raccordement (66, 67), par l'intermédiaire de vis (70) traversant les trous de vis (68, 69) et des trous alignés en conséquence à l'intérieur du longeron ainsi que d'écrous associés.

11. Châssis suivant l'une ou plusieurs des revendications précédentes, **caractérisé en ce que** l'essieu rigide se présente à la manière d'un essieu à bras tirés autostabilisateur et que la fonction de stabilisation limitant le roulis du véhicule est assignée à un ensemble constitué du corps d'essieu rigide (3) et de deux bras longitudinaux (4, 5) qui en sont solidaires,
- les deux bras longitudinaux (4, 5), très écartés, étant bridés en bout, à l'avant ou à l'arrière, au corps d'essieu rigide (3) au moyen de vis (25), avec liaison par adhérence ainsi que, le cas échéant, par obstacle,
- le corps d'essieu rigide (3) présentant une capacité de torsion définie dans une zone médiane droite (18) située entre les bras longitudinaux articulés (4, 5),
- les deux bras longitudinaux (4, 5) étant relativement rigides en flexion dans la direction verticale, mais à flexibilité limitée en torsion autour de leur axe longitudinal, leur rigidité en flexion ainsi que leur capacité de torsion étant adaptées, en liaison avec la capacité de torsion du corps d'essieu (3), à l'effet de stabilisation global visé par configuration et dimensionnement appropriés des sections déterminantes,
- cet essieu à bras tirés étant articulé aux extrémités libres de ses deux bras longitudinaux (4, 5) sur des supports (16, 17) solidaires du cadre, et
- chaque côté de l'essieu comportant sur le corps d'essieu rigide (3) un point d'articulation (32, 33) destiné à l'extrémité inférieure (28, 29) d'une jambe McPherson (6, 9) et déporté le plus possible vers la tête de raccordement d'un support de roue (34, 35) de manière à obtenir une voie de suspension maximale et - vu de l'avant - une disposition en flèche des deux jambes McPherson (6, 9), dans laquelle les extrémités supérieures (36, 37) desdites jambes sont moins écartées que leurs extrémités inférieures (28, 29).
